# EUROPÄISCHE PATENTSCHRIFT

(11) **EP 1 700 721 B1**
(45) Veröffentlichungstag und Bekanntmachung des Hinweises auf die Patenterteilung: **06.05.2009**
(21) Anmeldenummer: 05027308.5
(22) Anmeldetag: 14.12.2005
(51) Int. Cl.: B60G 7/00, B60G 3/26

(54) **Vorrichtung zum längenveränderlichen Verstellen eines Lenkers**
Apparatus for setting the variable length of an arm
Dispositif de réglage de la longueur variable d'un bras

(30) Priorität: 11.03.2005 DE 102005011253
(43) Veröffentlichungstag der Anmeldung: 13.09.2006
(73) Patentinhaber: AUDI AG, 85045 Ingolstadt (DE)
(72) Erfinder: Schmidt, Walter, 86643 Rennertshofen (DE)
(74) Vertreter: Asch, Konrad

(56) Entgegenhaltungen:
- EP-A- 0 277 649
- EP-B- 0 925 199
- EP-B- 1 053 165
- DE-A1- 3 139 792
- PATENT ABSTRACTS OF JAPAN Bd. 011, Nr. 196 (M-601), 24. Juni 1987 (1987-06-24) & JP 62 018309 A (DAIHATSU MOTOR CO LTD), 27. Januar 1987 (1987-01-27)

## Beschreibung

Die Erfindung betrifft ein Vorrichtung zum längenveränderlichen Verstellen zumindest eines Lenkers einer Radaufhängung für Kraftfahrzeuge gemäß dem Oberbegriff des Patentanspruches 1.

Eine derartige Vorrichtung zeigt beispielsweise die DE 37 36 229 A1, bei der ein Querlenker und ein ähnlich einer Spurstange am Radträger angreifender Hilfslenker je eine Verstelleinheit aufweisen, mittels denen abhängig von Fahrzuständen des Kraftfahrzeuges und Fahrbahnbeschaffenheiten Parameter der Radführung wie Spur, Sturz, Nachlauf etc. im Sinne einer Verbesserung der Fahreigenschaften des Kraftfahrzeuges zu verändern. Die Verstelleinheiten sind dabei zwischen den jeweiligen Gelenken der besagten Radführungselemente angeordnet und zählen zu den ungefederten Massen der Radaufhängung; ferner sind sie den im Fahrbetrieb auftretenden Kräften und Momenten ständig ausgesetzt und dementsprechend robust auszuführen.

Aus der DE 31 39 792 A1 ist eine gattungsgemäße Vorrichtung zum längenveränderlichen Verstellen zumindest eines Lenkers einer Radaufhängung für Kraftfahrzeuge bekannt. Der Lenker ist am Aufbau des Kraftfahrzeugs und an einem Radträger der Radaufhängung über ein Gelenk angelenkt. Außerdem ist eine Verstelleinheit vorgesehen, die abhängig von fahrzeugspezifischen Parametern die wirksame Länge des Lenkers verstellt, wobei die Verstelleinheit am Aufbau des Kraftfahrzeugs befestigt ist und das Gehäuse des aufbauseitigen Gelenkes des Lenkers verstellt. Das Gehäuse des aufbauseitigen Lenker-Gelenkes weist ein bolzenförmiges Stellteil auf, mittels dem es in einem Gehäuse der Verstelleinheit kolbenartig aufgenommen ist und über das es relativ zum Gehäuse der Verstelleinrichtung verlagerbar ist.

Konkret ist hier eine Steuer- und Regeleinheit vorgesehen, bei der ein hydraulisches Stell- und Regelglied in Form eines hydraulischen Stellzylinders mit einer im Stellzylinder geführten Kolbenstange mit dem aufbauseitigen Lenker-Gelenk verbunden ist.

Aus der EP 0 277 649 A ist eine hydraulische Zylinder-Kolben-Einheit bekannt, in der in einem gummielastischen Lager ein bolzenförmiges Stellteil als Kolbenstange in einem hydraulischen Zylinder geführt ist.

Demgegenüber ist es die Aufgabe der vorliegenden Erfindung, eine alternative Vorrichtung zum längenveränderlichen Verstellen zumindest eines Lenkers einer Radaufhängung für Kraftfahrzeuge bereitzustellen, mittels dem eine verbesserte Schwingung- und Geräuschdämpfung sowie gleichzeitig eine baulich einfache und auf unterschiedliche Anforderungen hin auslegbare aufbauseitige Anlenkmöglichkeit zur Verfügung gestellt wird.

Diese Aufgabe wird erfindungsgemäß mit den Merkmalen des Patentanspruches 1 gelöst. Vorteilhafte Weiterbildungen der Erfindung beinhalten die weiteren Patentansprüche.

Erfindungsgemäß wird vorgeschlagen, dass die Verstelleinheit am Aufbau des Kraftfahrzeuges befestigt ist und das Gehäuse des aufbauseitigen Gelenkes des Lenkers verstellt. Damit zählt die Verstelleinheit vorteilhaft zu den gefederten Massen des Kraftfahrzeuges. Ferner treten an der Verstelleinheit, da diese außerhalb des aufbauseitigen Gelenkes des Lenkers positioniert ist, weitgehendst keine Momente, insbesondere Kippmomente, bei z. B. dem Befahren einer unebenen Fahrbahn auf. Des Weiteren bleibt auch bei aktivierter Verstelleinheit die konstruktiv durch die Lenkerlänge vorgegebene Radkinematik erhalten, weil sich die Lenkerlänge von aufbauseitigem Gelenkpunkt zu radträgerseitigem Gelenkpunkt nicht ändert. Es sei bemerkt, dass unter "Aufbau" des Kraftfahrzeuges sowohl der Aufbau an sich, als auch ein mit dem Aufbau ggf. verbundener Hilfsrahmen oder Fahrschemel zu verstehen ist.

Erfindungsgemäß ist das Gehäuse des aufbauseitigen Gelenkes des Lenkers im Gehäuse der Verstelleinheit in Längsrichtung relativ zum Lenker verschiebbar angeordnet. Dies stellt eine stabile und robuste Führung des zu verstellenden Gelenkes in der Verstelleinheit dar.

Dabei ist das Gehäuse des aufbauseitigen Gelenkes unter Zwischenschaltung einer in dem Gehäuse der Verstelleinheit vorgesehenen Führungsbuchse mit einem bolzenförmigen Stellteil der Verstelleinheit fest verbunden.

Des weiteren kann baulich und fertigungstechnisch besonders günstig ein am Gehäuse des aufbauseitigen Gelenkes abragender Gewindebolzen in einen hülsenförmigen, mit einem Innengewinde versehenen Abschnitt des Stellteiles eingeschraubt sein, wobei die Führungsbuchse zwischen einem Ringbund am hülsenförmigen Abschnitt des Stellteiles und dem Gehäuse des Gelenkes axial eingespannt ist.

Zur verbesserten Schwingungs- und Geräuschdämpfung gegenüber dem Aufbau des Kraftfahrzeuges kann zwischen dem Gehäuse des aufbauseitigen Gelenkes und dem Gehäuse der Verstelleinheit ein gummielastisches Lager eingeschaltet sein.

Das gummielastische Lager kann in vorteilhafter Weise ein in Längsrichtung des Lenkers relativ weiches und in Querrichtung dazu relativ hartes Gummi-Metall-Hülsenlager sein, dessen Lagermittelachse parallel zur Verstellrichtung und im wesentlichen koaxial zur Längsachse des zu verstellenden Lenkers ausgerichtet ist.

Besonders vorteilhaft kann dabei das Hülsenlager zwischen der mit dem Gelenkgehäuse fest verbundenen Führungsbuchse und dem Gehäuse der Verstelleinheit angeordnet sein. Das in Verstellrichtung auf Schub belastete Hülsenlager ermöglicht somit eine exakte Verstellung bei relativ geringen Verstellkräften, ist aber zur Sicherstellung einer exakten Radführung in radialer Richtung aufgrund seiner Belastung auf Druck relativ hart und unnachgiebig.

Das Gehäuse der Verstelleinheit kann baulich und fertigungstechnisch günstig im wesentlichen zylindrisch ausgebildet und der auf das Stellteil wirkende Stellmotor und die Führungsbuchse mit oder ohne gummielastischem Lager in eine offene Seite des Gehäuses eingesetzt und darin befestigt sein. Dabei kann ferner besonders montagegünstig der Stellmotor und/oder die Führungsbuchse mit oder ohne gummielastischem Lager mittels Sprengringe im zylindrischen Gehäuse festgelegt sein.

Schließlich kann insbesondere in Verbindung mit dem zusätzlichen, gummielastischen Hülsenlager das aufbauseitige Gelenk des Lenkers ein Kugelgelenk sein.

Ein Ausführungsbeispiel der Erfindung ist im folgenden mit weiteren Einzelheiten näher erläutert. Die schematische Zeichnung zeigt in:
- **Fig. 1**: grob schematisch eine Radaufhängung für ein ungelenktes Hinterrad eines Kraftfahrzeuges, mit einem unteren Schräglenker und zwei oberen Einzellenkern und einer Verstelleinheit; und
- Fig. 2: einen teilweisen Längsschnitt durch den einen Lenker der Radaufhängung gemäß Fig. 1 mit einer aufbauseitigen Verstelleinheit.

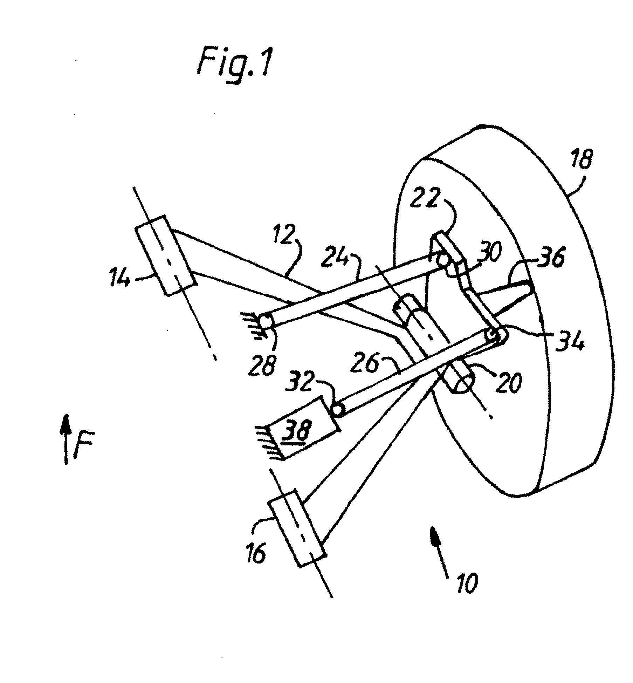

Die Fig.1 stellt eine Radaufhängung 10 für Kraftfahrzeuge dar, mit einem unteren Schräglenker 12, der über Gelenke 14, 16 an einem nicht dargestellten Aufbau oder einem Hilfsrahmen des Kraftfahrzeuges schwenkbar angelenkt ist.

Über ein im Bereich des Hinterrades 18 vorgesehenes Führungslager 20 ist der Schräglenker 12 schwenkbar mit dem Radträger 22 verbunden; die Gelenke 14, 16 und das Führungslager 20 sind koaxial zu den eingezeichneten Schwenkachsen ausgerichtete Gummi-Metall-Hülsenlager.

In einer oberen Ebene der Radaufhängung 10 sind die beiden Einzel-Lenker 24, 26 vorgesehen, die jeweils über Kugelgelenke 28, 30 bzw. 32, 34 mit dem Aufbau des Kraftfahrzeuges bzw. mit dem Radträger 22 verbunden sind. Der im Vergleich zur eingezeichneten Fahrtrichtung F des Kraftfahrzeuges hintere Lenker 26 der Radaufhängung 10 greift mit seinem äußeren Kugelgelenk 34 deutlich hinter der Radachse 36 am Radträger 22 an, so dass von der Funktion her der Lenker 26 zusätzlich wie eine Spurstange eines gelenkten Rades wirkt bzw. bei Längenänderungen eine Lenkbewegung des Hinterrades 18 verursacht.

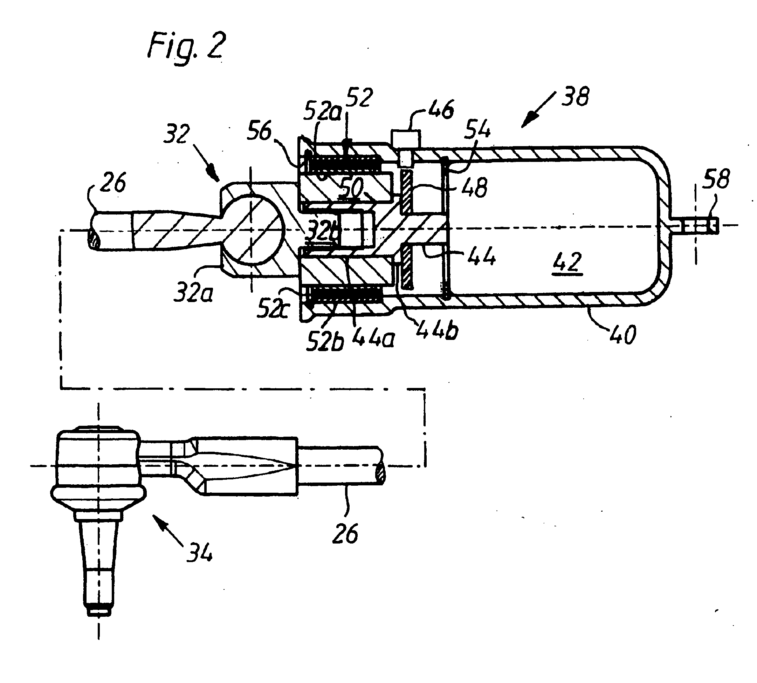

Zur Längenverstellung des oberen, hinteren Lenkers 26 bzw. des relevanten Abstandes zwischen dem Gelenkmittelpunkt des äußeren Gelenkes 34 und dem Aufbau ist eine am Aufbau befestigte Verstelleinheit 38 (vgl. insbesondere Fig. 2) vorgesehen.

Die Verstelleinheit 38 setzt sich im wesentlichen zusammen aus einem zylindrischen, einseitig offenen Gehäuse 40 und einem darin integrierten Stellmotor 42, der ein bolzenförmiges Stellteil 44 als Ausgangsglied aufweist.

Der Stellmotor 42, der nicht Gegenstand der vorliegenden Erfindung bildet, kann elektromechanisch, hydraulisch, piezoelektrisch, etc. in bekannter Weise ausgeführt sein und das Stellteil 44 entlang der Mittelachse des Gehäuses 40 bei entsprechender Ansteuerung über ein nicht dargestelltes Steuergerät verstellen.

Zwischen dem Gehäuse 40 und dem Stellteil 44 ist ein Wegsensor 46 angeordnet, der im Zusammenwirken mit einem magnetisierten Ring 48 auf dem Stellteil 44 in einer nicht dargestellten feed back Schaltung die Position des Stellteiles 44 erfasst und dem Steuergerät zur Regelung der gewünschten Radstellung angibt.

Das Gehäuse 32a des Kugelgelenkes 32 ist über einen Gewindebolzen 32b mit einem hülsenförmigen, ein Innengewinde aufweisenden Abschnitt 44a fest verschraubt, wobei eine rotationssymmetrische Führungsbuchse 50 wie ersichtlich zwischen dem Gehäuse 32a des Kugelgelenkes 32 und einem radial abragendem Ringbund 44b des Stellteiles 44 fest eingespannt ist.

Zwischen der Führungsbuchse 50 und dem umgebenden Gehäuse 40 der Verstelleinheit 38 ist ein Gummi-Metall-Hülsenlager 52 mit einem inneren und einem äußeren Metallring 52a, 52b und einem ringförmigen Gummi-oder Elastomer-Körper 52c eingeschaltet. Das Hülsenlager 52, dessen Innenring 52a auf der Führungsbuchse 50 z. B. durch Presssitz gehalten ist, ist so ausgerichtet, dass es in der Verstellrichtung des Stellteiles 44 auf Schub, in senk-rechter Richtung dazu auf Druck belastet ist.

Das Hülsenlager 52 ist ferner konstruktiv so ausgelegt, dass es den vorgegebenen Verstellweg des Lenkers 26 bei relativ geringen Rückstellkräften zulässt, in senkrechter Richtung dazu aber hart ist bzw. eine hohe Federrate aufweist.

Der Stellmotor 42 einerseits und das Hülsenlager 52 sind in die offene Seite des Gehäuses 40 wie ersichtlich eingesetzt und mittels in entsprechende Ringnuten des Gehäuses 40 eingerastete Sprengringe 54, 56 axial gesichert bzw. gehalten.

Des weiteren sind an dem Gehäuse 40 der Verstelleinheit 38 mehrere Befestigungsaugen 58 (auf der Zeichnung Fig. 2 ist nur ein Befestigungsauge 58 er-sichtlich) angeformt, über die die Verstelleinheit 38 mit dem Aufbau des Kraftfahrzeuges fest verschraubt ist.

Durch Ansteuerung der Verstelleinheit 38 über das nicht dargestellte Steuergerät z. B. einer Fahrstabilitätsregelung des Kraftfahrzeuges wird bei vorgegebenen fahrdynamischen Zuständen und/oder Fahrbahnbeschaffenheiten das Stellteil 44 und dementsprechend das mit dem Stellteil 44 fest verbundene Gehäuse 32a des Kugelgelenkes 32 entlang der Längsachse des Lenkers 26 in der einen oder anderen Richtung verschoben. Dies bewirkt im Ausführungsbeispiel ein Einlenken des Hinterrades 18 in Richtung Vorspur oder Nachspur.

Die Erfindung ist nicht auf das dargestellte Ausführungsbeispiel beschränkt. So kann anstelle der beschriebenen Radaufhängung 10 auch eine andere Radaufhängung mit vergleichbaren Lenkern (z. B. Querlenkern, Längslenkern, Einzellenkern) an der Hinterachse oder Vorderachse des Kraftfahrzeuges verwendet sein. Es können auch mehrere Verstelleinheiten 38 an mehreren Lenkern wie beschrieben angeordnet sein.

## Patentansprüche

1. Vorrichtung zum längenveränderlichen Verstellen zumindest eines Lenkers (26) einer Radaufhängung für Kraftfahrzeuge, wobei der Lenker (26) am Aufbau des Kraftfahrzeuges und an einem Radträger (22) der Radaufhängung über ein Gelenk (32) angelenkt ist und eine Verstelleinheit (38) vorgesehen ist, die abhängig von fahrspezifischen Parat metern die wirksame Länge des Lenkers (26) verstellt, wobei die Verstelleinheit (38) am Aufbau des Kraftfahrzeuges befestigt ist und das Gehäuse (32a) des aufbauseitigen Gelenkes (32) des Lenkers (26) verstellt, wobei das Gehäuse (32a) des aufbauseitigen Gelenkes (32) des Lenkers (26) im Gehäuse (40) der Verstelleinheit (38) in Längsrichtung relativ zum Lenker (26) verschiebbar angeordnet ist, **dadurch gekennzeichnet, dass** das Gehäuse (32a) des aufbauseitigen Gelenkes (32) unter Zwischenschaltung einer in dem Gehäuse (40) der Verstelleinheit (38) vorgesehenen Führungsbuchse (50) mit einem bolzenförmigen Stellteil (44) der Verstelleinheit (38) fest verbunden ist, und zwischen dem Gehäuse (32a) des aufbauseitigen Gelenkes (32) und dem Gehäuse (40) der Verstelleinheit (38) ein, einen vorgegebenen Verstellweg des Lenkers (26) zulassendes gummielastisches Lager (52) eingeschaltet ist.

2. Vorrichtung nach Anspruch 1, **dadurch gekennzeichnet, dass** ein am Gehäuse (32a) des aufbauseitigen Gelenkes (32) abragender Gewindebolzen (32b) in einen hülsenförmigen, mit einem Innengewinde versehenen Abschnitt (44a) des Stellteiles (44) eingeschraubt ist, wobei die Führungsbuchse (50) zwischen einem Ringbund (44b) am hülsenförmigen Abschnitt (44a) des Stellteiles (44) und dem Gehäuse (32a) des Gelenkes (32) axial eingespannt ist.

3. Vorrichtung nach Anspruch 1 oder 2, **dadurch gekennzeichnet, dass** das gummielastische Lager ein in Längsrichtung des Lenkers (26) relativ weiches und in Querrichtung dazu relativ hartes Gummi-Metall-Hülsenlager (52) ist.

4. Vorrichtung nach Anspruch 3, **dadurch gekennzeichnet, dass** das Hülsenlager (52) zwischen der Führungsbuchse (50) und dem Gehäuse (40) der Verstelleinheit (38) angeordnet ist.

5. Vorrichtung nach einem der vorhergehenden Ansprüche, **dadurch gekennzeichnet, dass** das Gehäuse (40) der Verstelleinheit (38) im wesentlichen zylindrisch ausgebildet ist und dass der auf das Stellteil (44) wirkende Stellmotor (42) und die Führungsbuchse (50) mit oder ohne gummielastischem Lager (52) in eine offene Seite des Gehäuses (40) eingesetzt und darin befestigt sind.

6. Vorrichtung nach Anspruch 5, **dadurch gekennzeichnet, dass** der Stellmotor (42) und/oder die Führungsbuchse (50) mit oder ohne gummielastischem Lager (52) mittels Sprengringe (54, 56) im zylindrischen Gehäuse (40) festgelegt sind.

7. Vorrichtung nach einem der vorhergehenden Ansprüche, **dadurch gekennzeichnet, dass** das aufbauseitige Gelenk des Lenkers (26) ein Kugelgelenk (32) ist.

8. Vorrichtung nach einem der vorhergehenden Ansprüche, **dadurch gekennzeichnet, dass** im Gehäuse der Verstelleinheit ein Wegsensor zur Erfassung der Position des Stellteiles relativ zum Gehäuse vorgesehen ist, der in einer feed back Schaltung mit einem entsprechenden Steuergerät zur Einstellung fahrdynamisch relevanter Radstellungen an der Radführung verbunden ist.

## Claims

1. Apparatus for setting the variable length of at least one arm (26) of a suspension system for motor vehicles, in which the arm (26) is articulated through a joint (32) on the body of the motor vehicle and on a wheel carrier (22) of the suspension system and an adjustment unit (38) is provided, which sets the effective length of the arm (26) depending on the parameters specific to the movement of the vehicle, in which the adjustment unit (38) is fastened to the body of the motor vehicle and adjusts the housing (32a) of the joint (32) of the arm (26) on the body side, in which the housing (32a) of the joint (32) of the arm (26) on the body side is arranged in the housing (40) of the adjustment unit (38) so that it can be moved in the longitudinal direction in relation to the arm (26), **characterised in that** the housing (32a) of the joint (32) on the body side is fixed firmly by interposing a guide bushing (50) provided in the housing (40) of the adjustment unit (38) with a pin shaped adjusting part (44) of the adjustment unit (38) and a rubber like bearing (52) allowing a preset adjustable path of the arm (26) is connected between the housing (32a) of the joint (32) on the body side and the housing (40) of the adjustment unit (38).

2. Apparatus according to claim 1, **characterised in that** a threaded pin (32b) projecting on the housing (32a) of the joint (32) on the body side is screwed into a sleeve shaped section (44a) of the adjusting part (44) provided with an internal thread, in which the guide bushing (50) is clamped axially between a collar (44b) on the sleeve shaped section (44a) of the adjusting part (44) and the housing (32a) of the joint (32).

3. Apparatus according to claim 1 or 2, **characterised in that** the rubber like bearing is a rubber metal sleeve bearing (52), which is relatively soft in the longitudinal direction of the arm (26) and relatively hard in the crosswise direction to it.

4. Apparatus according to claim 3, **characterised in that** the sleeve bearing (52) is arranged between the guide bushing (50) and the housing (40) of the adjustment unit (38).

5. Apparatus according to one of the previous claims, **characterised in that** the housing (40) of the adjustment unit (38) is made essentially cylindrical and that the servomotor (42) acting on the adjusting part (44) and the guide bushing (50) with or without rubber like bearing (52) is inserted into an open side of the housing (40) and fastened in it.

6. Apparatus according to claim 5, **characterised in that** the servomotor (42) and/or the guide bushing (50) with or without rubber like bearing (52) are fixed in the cylindrical housing (40) by means of retaining rings (54, 56).

7. Apparatus according to one of the previous claims, **characterised in that** the joint of the arm (26) on the body side is a ball and socket joint (32).

8. Apparatus according to the previous claims, **characterised in that** a path sensor for detecting the position of the adjusting part in relation to the housing is provided in the housing of the adjustment unit, which is connected to an appropriate control device to adjust the relevant wheel settings on the wheel guide according to the dynamics of the movement of the vehicle in a feed back circuit.

## Revendications

1. Dispositif de réglage de la longueur variable d'au moins un bras (26) d'une suspension de roue pour véhicules automobiles, le bras (26) étant articulé au niveau de la carrosserie du véhicule automobile et au niveau d'un support de roue (22) de la suspension de roue par le biais d'une articulation (32) et une unité de réglage (38) étant prévue, laquelle règle la longueur efficace du bras (26) en fonction de paramètres spécifiques à la conduite, l'unité de réglage (38) étant fixée à la carrosserie du véhicule automobile et réglant le boîtier (32a) de l'articulation côté carrosserie (32) du bras (26), le boîtier (32a) de l'articulation côté carrosserie (32) du bras (26) étant disposé dans le boîtier (40) de l'unité de réglage (38) de manière mobile dans le sens longitudinal par rapport au bras (26), **caractérisé en ce que** le boîtier (32a) de l'articulation côté carrosserie (32) est relié solidement à un organe de réglage (44) en forme de boulon de l'unité de réglage (38) par intercalage d'une douille de guidage (50) prévue dans le boîtier (40) de l'unité de réglage (38), et un palier élastique (52) permettant une course de réglage prédéfinie du bras (26) est inséré entre le boîtier (32a) de l'articulation côté carrosserie (32) et le boîtier (40) de l'unité de réglage (38).

2. Dispositif selon la revendication 1, **caractérisé en ce qu'**un boulon fileté (32b) en saillie du boîtier (32a) de l'articulation côté carrosserie (32) est vissé dans une section (44a) de l'organe de réglage (44) en forme de douille et dotée d'un filetage intérieur, la douille de guidage (50) étant serrée axialement entre un épaulement annulaire (44b) au niveau de la section en forme de douille (44a) de l'organe de réglage (44) et le boîtier (32a) de l'articulation (32).

3. Dispositif selon la revendication 1 ou 2,
**caractérisé en ce que** le palier élastique est un palier à douille caoutchouc-métal (52) relativement souple dans le sens longitudinal du bras (26) et relativement dur dans le sens transversal.

4. Dispositif selon la revendication 3, **caractérisé en ce que** le palier à douille (52) est disposé entre la douille de guidage (50) et le boîtier (40) de l'unité de réglage (38).

5. Dispositif selon l'une quelconque des revendications précédentes, **caractérisé en ce que** le boîtier (40) de l'unité de réglage (38) est réalisé de manière essentiellement cylindrique et **en ce que** le servomoteur (42) agissant sur l'organe de réglage (44) et la douille de guidage (50) avec ou sans palier élastique (52) sont insérés dans un côté ouvert du boîtier (40) et y sont fixés.

6. Dispositif selon la revendication 5, **caractérisé en ce que** le servomoteur (42) et/ou la douille de guidage (50) avec ou sans palier élastique (52) sont fixés dans le boîtier cylindrique (40) au moyen de circlips (54, 56).

7. Dispositif selon l'une quelconque des revendications précédentes, **caractérisé en ce que** l'articulation côté carrosserie du bras (26) est une rotule (32).

8. Dispositif selon l'une quelconque des revendications précédentes, **caractérisé en ce qu'**un détecteur de déplacement est prévu dans le boîtier de l'unité de réglage pour la détection de la position de l'organe de réglage par rapport au boîtier, lequel est relié dans un circuit rétroactif à un appareil de commande correspondant pour le réglage de positions de roue pertinentes du point de vue dynamique au niveau du guidage de roue.
